# EUROPEAN PATENT APPLICATION

(11) **EP 1 990 741 A1**
(43) Date of publication of application: **12.11.2008**
(21) Application number: 07009421.4
(22) Date of filing: 10.05.2007
(51) Int. Cl.: G06F 17/30, G06N 5/02

(54) **Reasoning architecture**

(71) Applicant: Ontoprise GmbH, 76227 Karlsruhe (DE)
(72) Inventor: Angele, Jürgen, 76863 Herxheim (DE); Baier, Jürgen, 76137 Karlsruhe (DE)
(74) Representative: Köllner, Malte

(57) **Abstract**

An inference engine is described with an improved speed in evaluating queries posed to a data structure based on an ontology with a declarative set of rules. The inference engine comprises: rule rewriters, a rule compiler, and an operator net.

## Description

### BACKGROUND OF THE INVENTION

Inference machines are capable of answering queries by logical conclusion or finding new information hidden in related data.

The operation of an inference machine will first be explained briefly.

As a rule, an inference machine is based on a data processing system or a computer system with means for storing data. The data processing system has a query unit for determining output variables by accessing the stored data. The data are allocated to predetermined classes which are part of at least one stored class structure forming an ontology.

### ONTOLOGIES

In computer science, an ontology designates a data model that represents a domain of knowledge and is used to reason about the objects in that domain and the relations between them.

The ontology preferably comprises a hierarchical structure of the classes. Within the hierarchical structure, the classes of a particular layer of the hierarchical structure are allocated to precisely one class of the higher-level layer. In general, there is only a simple inheritance of characteristics in such a case. In general, the class structure can also be arranged in different ways, for example as acyclic graph in which multiple inheritance can also be permitted.

To the classes, attributes are allocated which can be transmitted within a class structure. Attributes are features of a class. The class "person" can have the attribute "hair color", for example. To this attribute, different values (called "attribute values") are allocated for different actual persons (called "instances"), e.g. brown, blond, black, etc. Sometimes in the literature, the classes are called "categories" and the attributes are called "properties".

The query unit contains an inference machine or inference unit by means of which rules and logic expressions can be evaluated.

The rules combine elements of the class structure and/or data. Classes, attributes, synonyms, relations, that is to say relations between elements and allocations, in short everything from which the ontology or the class structure is built up are called elements of the class structure. As a rule, the rules are arranged as a declarative system of rules. An important property of a declarative system of rules consists in that the results of an evaluation do not depend on the order of the definition of the rules.

The rules enable, for example, information to be found which has not been described explicitly by the search terms. The inference unit even makes it possible to generate, by combining individual statements, new information which was not explicitly contained in the data but can only be inferred from the data (see section query below).

An ontology regularly contains the following elements:
- a hierachical structure of classes, that can be understood by the end user,
- attributes associated to the classes and their inheritance,
- relations between classes,
- a declarative system of logical rules, containing further knowledge,
- an inference unit by evaluating the rules for answering queries and for generating new knowledge,
- a formal logical basis, e.g. based on description logic, which in turn is based on predicate logic (see e.g. http://en.wikipedia.org/wiki/Description_logic: "Description logics (DL) are a family of knowledge representation languages which can be used to represent the terminological knowledge of an application domain in a structured and formally well-understood way. The name description logic refers, on the one hand, to concept descriptions used to describe a domain and, on the other hand to the logic-based semantics which can be given by a translation into first-order predicate logic. Description logic was designed as an extension to frames and semantic networks, which were not equipped with a formal logic-based semantics. Description logic was given its current name in the 1980s. Previous to this it was called (chronologically): terminological systems, and concept languages. Today description logic has become a cornerstone of the Semantic Web for its use in the design of ontologies."
- a semantic for assigning meaning to the classes, and
- an ontology language to formulate the ontology, e. g. OWL, RDF or F-Logic.

Thus, ontologies are logical systems that incorporate semantics. Formal semantics of knowledge-representation systems allow the interpretation of ontology definitions as a set of logical axioms. E.g. we can often leave it to the ontology itself to resolve inconsistencies in the data structure. E.g., if a change in an ontology results in incompatible restrictions on a slot, it simply means that we have a class that will not have any instances (is "unsatisfiable"). If an ontology language based on Description Logics (DL) is used to represent the ontology (e.g. OWL, RDF or F-Logic), we can e.g. use DL reasoners to re-classify changed concepts based on their new definitions.

It should be clear to one skilled in the art, that an ontology has many features and capabilities that a simple data schema, database or relational database is lacking.

### INTRODUCTION TO F-LOGIC

For the formulation of queries, often the logic language F-Logic is a useful ontology language [see, e.g., J. Angele, G. Lausen: "Ontologies in F-Logic" in S. Staab, R. Studer (Eds.): Handbook on Ontologies in Information Systems. International Handbooks on Information Systems, Springer, 2003, page 29]. In order to gain some intuitive understanding of the functionality of F-Logic, the following example might be of use, which maps the relations between well-known biblical persons.

First, we define the ontology, i.e. the classes and their hierarchical structure as well as some facts:
abraham:man.
sarah:woman.
isaac:man[fatherIs->abraham; motherIs->sarah].
ishmael:man[fatherIs->abraham; motherIs->hagar:woman].
jacob:man[fatherIs->isaac; motherIs->rebekah:woman].
esau:man[fatherIs->isaac; motherIs->rebekah].

Obviously, some classes are defined: "man" and "woman". E.g., Abraham is a man. The class "man" has the properties "fatherIs" and "motherIs", which are indicating the parents. E.g., the man Isaac has the father Abraham and the mother Sarah. In this particular case, the properties are object properties.

Although F-Logic is suited for defining the class structure of an ontology, nevertheless, in many cases, the ontology languages RDF or OWL are used for these purposes.

Further, some rules are given, defining the dependencies between the classes:
FORALL X, Y X [sonIs->>Y] <- Y:man [fatherIs->X] .
FORALL X, Y X [sonIs->>Y] <- Y:man [motherIs->X] .
FORALL X, Y X [daughterIs->>Y] <- Y:woman [fatherIs->X] .
FORALL X, Y X [daughterIs->>Y] <- Y:woman [motherIs->X] .

Rules written using F-Logic consist of a rule header (left side) and a rule body (right side). Thus, the first rule in the example given above means in translation: If Y is a man, whose father was X, then Y is one of the (there might be more than one) sons of X. The simple arrow "->" indicates that, for a given datatype or object property, only one value is possible, whereas the double-headed arrow "->>" indicates that more than one value might be assigned to a property.

Finally, we formulate a query, inquiring for all women having a son whose father is Abraham. In other words: With which women did Abraham have a son?
FORALL X,Y <- X:woman[sonIs->>Y[fatherIs->abraham]].

The syntax of a query is similar to the definition of a rule, but the rule header is omitted.

The answer is:
X = sarah
X = hagar

### QUERIES AND INFERENCE

Let us consider an example of a query. A user would like to inquire about the level of knowledge of a person, known to the user, with the name "Mustermann". For one particular categorical structure, a corresponding query could be expressed in F-Logic as follows (see below for another more exhaustive example) :
FORALL X,Y <- X:person[name->Mustermann; knows->>Y].

A declarative rule that can be used to process this query can be worded as follows: "If a person writes a document, and the document deals with a given subject matter, then this person has knowledge of the subject matter." Using F-Logic, this rule could be expressed in the following way (see below):
FORALL X,Y,Z Y [knows- >>Z] <- X:document[author->>Y:person] AND X[field->>Z].

The categories "persons" and "document" from two different categorical structures are linked in this way. Reference is made to the subject of the document, wherein the subject of the document is allocated as data to the attribute "subject" of the category "document".

The areas of knowledge of the person with the name "Mustermann" are obtained as output variables for the above given query.

For implementing this example, several logic languages can be used. As an example, an implementation using the preferred logic language "F-Logic" will be demonstrated.
/* ontology */
author:: person. field:: science.
biotechnology: field.
physics: field.
chemistry: field.
document [author=>>author; field=>>field].
person[authorOf=>>document].

In this first section, the ontology itself is defined: The data contain documents with two relevant attributes - the author and the scientific field.
/* facts */
Paul: person.
Anna: person.
Mustermann: person.
doc1: document [field->>biotechnology; author->>Paul].
doc2: document [field->>biotechnology; author->>Paul].
doc3: document [field->>chemistry; author->>Paul].
doc100: document [field->>physics; author->>Anna].
doc101: document [field->>physics; author->>Anna].
doc200: document [field->>biotechnology;
author->>Mustermann].
doc201: document [field->>biotechnology;
author->>Mustermann].
doc202: document [field->>biotechnology;
author->>Mustermann].

In this section, we defined the facts of the ontology. There are eight documents (named doc1, ..., doc202) with the given fields of technology and the given authors.
/* query */
FORALL X <- Mustermann[knows->>X:field].

This section is the actual query section. Using the declarative rules defined in the previous section, we deduce, by inference, the fields of experience of the author "Mustermann".

In the inference unit, the above query is evaluated using the above rule. This is shown as a forward chaining process meaning that the rules are applied to the data and derived data as long as new data can be deduced.

Given the above facts about the documents and the above given rule:
FORALL X,Y,Z Y [knows->>Z] <- X:document [author->>Y:person] and X [field->>Z].

first all substitutions of the variables X, Y and Z are computed which make the rule body true:
X=doc1, Y=Paul, Z=biotechnology
X=doc2, Y=Paul, Z=biotechnology
X=doc3, Y=Paul, Z=chemistry
X=doc100, Y=Anna, Z=physics
X=doc101, Y=Anna, Z=physics
X=doc200, Y=Mustermann, Z=biotechnology
X=doc201, Y=Mustermann, Z=biotechnology
X=doc202, Y=Mustermann, Z=biotechnology

After that the variables in the rule head are substituted by these values resulting in the following set of facts:
Paul [knows->>biotechnology] .
Paul [knows->>chemistry] .
Anna [knows->>physics].
Mustermann[knows->>biotechnology].

In the next step for our query
FORALL X <- Mustermann [knows->>X:field].
the variable substitutions for X are computed which make the query true:
X = biotechnology

This variable substitution represents the result of our query. The result is preferably output via the input/output unit.

The example shows that the query not only obtains information stored in the database system explicitly. Rather, declarative rules of this type establish relations between elements in database systems, such that new facts can be derived, if necessary.

Thus, additional information, which cannot explicitly be found in the original database, is "created" (deduced) by inference: In the original database (which, in this simple example, has been "simulated" by creating the ontology in F-Logic, see above), there is no such information as "knowledge" associated (e. g. as an attribute) to a certain person. This additional information is created by inference from the authorship of the respective person, using known declarative rules.

Processing a query with the term "biotechnology" in a traditional database system would require that the user already has detailed information concerning the knowledge of Mustermann. Furthermore, the term "biotechnology" would have to be found explicitly in a data record allocated to the person Mustermann.

Processing a query with the term "knowledge" in principle would not make sense for a traditional database system because the abstract term "knowledge" cannot be allocated to a concrete fact "biotechnology".

The example shows that, compared to traditional database systems, considerably less pre-knowledge, and thus also less information, is required for the computer system according to the invention to arrive at precise search results.

### DYNAMIC FILTERING

The following illustrates in more detail the way the inference unit evaluates the rules to answer the queries.

The most widely published inference approach for F-Logic is the alternating fixed point procedure [A. Van Gelder, K. A. Ross, and J. S. Schlipf: "The well-founded semantics for general logic programs"; Journal of the ACM, 38(3):620-650, July 1991]. This is a forward chaining method (see below) which computes the entire model for the set of rules, i.e. all facts, or more precisely, the set of true and unknown facts. For answering a query the entire model must be computed (if possible) and the variable substitutions for answering the query are then derived.

Forward chaining means that the rules are applied to the data and derived data as long as new data can be deduced. Alternatively, backward chaining can be used. Backward chaining means that the evaluation has the query as starting point and looks for rules with suitable predicates in their heads that match with an atom of the body of the query. The procedure is recursively continued. Also backward chaining looks for facts with suitable predicate symbols.

An example for a predicate for the F-Logic expression Y[fatherIs->X] is father(X,Y), which means that X is the father of Y. "Father" is the predicate symbol. The F-Logic terminology is more intuitive than predicate logic. Predicate logic, however, is more suited for computation. Therefore, the F-Logic expressions of the ontology and query are internally rewritten in predicate logic before evaluation of the query.

In the preferred embodiment, the inference engine performs a mixture of forward and backward chaining to compute (the smallest possible) subset of the model for answering the query. In most cases, this is much more efficient than the simple forward or backward chaining evaluation strategy.

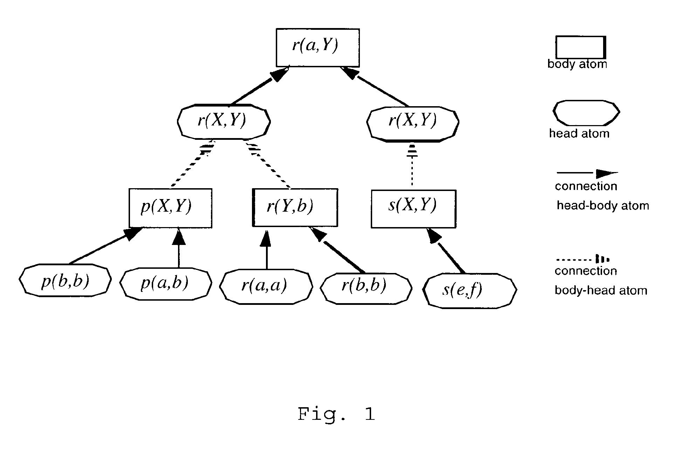

The inference or evaluation algorithm works on a data structure called system graph (see e.g. Fig. 1). This graph represents the set of rules and their dependencies. Every atom of the rules (i. e. head or body, left hand or right hand side, or part of the body) is represented as a vertex of the graph. All atoms in the body of a rule - which may be connected by AND only - are connected to the head atom (header) of the rule by a connection or an edge. Every head atom, in turn, is upwardly connected to all body atoms with the same predicate symbol. Let's have a look at an example:
/* rules */
FORALL X,Y r(X,Y) <- p(X,Y) AND r(Y,b).
FORALL X,Y r(X,Y) <- s(X,Y).
/* facts */
q(a). p(b,b). p(a,b). r(a,a). r(b,b). s(e,f).
/* query */
FORALL Y <- r(a,Y).

This example is illustrated in Fig. 1.

The bottom-up evaluation using the system graph may be seen as a flow of data from the sources (facts) to the sinks (query) along the edges of the graph.

If a fact q(a1,...,an) flows from a head atom of rule r to a body atom q(b1,...,bn) of rule r' (along a solid arrow) a match operation takes place. This means that the body atom of rule r' has to be unified with the facts produced by rule r. All variable substitutions for a body atom form the tuples of a relation, which is assigned to the body atom. Every tuple of this relation provides a ground term (variable free term) for every variable in the body atom. To evaluate the rule, all relations of the body atoms are joined and the resulting relation is used to produce a set of new facts for the head atom. These facts again flow upwards in the system graph.

For the first rule
FORALL X, Y r(X,Y) <- p(X,Y) AND r(Y,b).
there are four possible input combinations, two facts for p(X,Y), namely p(b,b) and p(a,b), multiplied by two facts for r(Y,b), namely r(a,a) and r(b,b). Only the fact r(b,b) matches r(Y,b) in the rule, which leads to Y being b in the rule. With Y being b, there are two possible facts matching p(X,Y), namely p(b,b) and p(a,b). Thus, two new facts can be derived from the first rule on the left-hand side, namely
r(b,b) <- p(b,b) AND r(b,b)
and
r(a,b) <- p(a,b) AND r(b,b).

On the right hand side of the system graph according to Fig. 1, we see that the fact s(e,f) leads to r(e,f), applying the second rule. r(e,f), however, cannot be substituted into the query
FORALL Y <- r(a,Y).
since a does not match e.

Only the fact r(a,b) derived with the first rule matches the query leading to the answer
Y=b.

This evaluation strategy corresponds to the naive evaluation [J. D. Ullman: "Principles of Database and Knowledge-Base Systems"; vol. I, Computer Sciences Press, Rockville, Maryland, 1988] and realizes directly the above mentioned alternating fixed point procedure. Because the system graph may contain cycles (in case of recursion within the set of rules) semi naive evaluation [J. D. Ullman: "Principles of Database and Knowledge-Base Systems"; vol. I, Computer Sciences Press, Rockville, Maryland, 1988] is applied in the preferred embodiment to increase efficiency.

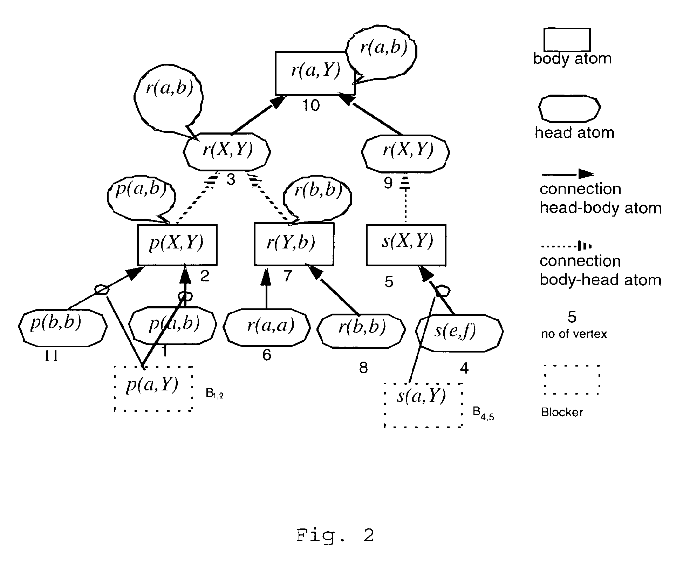

The improved bottom-up evaluation (forward chaining) of the example mentioned above is shown in Fig. 2. The facts flowing to a vertex are shown in the bubble attached to the vertex.

Fig. 2 exemplifies that facts are created for the vertices although they are useless for answering the posed query. For instance the fact p(b,b) (vertex 11) flowing to the body vertex p(X,Y) (vertex 2) cannot contribute in any way to the answer, because in the query r(a,Y) only instances of the variable X which are equal to the constant a are relevant. Such useless facts then in turn produce new useless facts in the subsequent evaluation.

The key idea of the preferred embodiment is to abort the flow of useless facts as early as possible (i.e. as close to the sources of the graph as possible) attaching so-called blockers to the head-body edges of the graph. Such a blocker consists of a set of atoms. A blocker lets a fact pass, if there exists an atom within the blocker which matches with the fact.

For instance the blocker B1,2 between vertex 1 and vertex 2, B1,2 = {p(a,Y)} prevents the fact p(b,b) from flowing to the vertex 2. Additionally, the creation of the fact r(b,b) for vertex 3 is prevented by a corresponding blocker B7,3 (not shown) between vertex 7 and vertex 3. Similarly, the blocker B4,5 = {s(a,Y)} between vertex 4 and vertex 5 blocks the flow of facts on the right-hand side of the system graph.

Thus, the answer to the posed query r(a,Y) remains the same, although the amount of facts flowing through the graph is reduced.

The blockers at the edges of the system graph are created by propagating constants within the query, within the rules, or within already evaluated facts downwards in the graph. For instance the blocker B1,2 = {p(a,Y)} is determined using the constant a at the first argument position of the query r(a,Y). This blocker is valid because for the answer only facts at vertex 3 are useful containing an 'a' as first argument. So variable X in the first rule must be instantiated with 'a' in order to be useful for the query.

The blockers at the edges of the system graph are created during the evaluation process in the following way. First of all, constants within the query and within the rules are propagated downwards in the graph. Starting at the query or at a body atom, they are propagated to all head atoms, which are connected to this atom. From the head atoms they are propagated to the first body atom of the corresponding rule and from there in the same way downwards. In propagating the constants downwards, they produce new blocker atoms for the blockers at the sources.

Alternatively, blockers can also be applied in the upper layers of the system graph, but this does not lead to an improvement of the performance. Therefore, blockers are only applied at the sources of the graph.

### FIELD OF THE INVENTION

For the performance of an inference, i.e. the speed of evaluation, not for the result, several conditions are crucial. On one hand, there is the sequence of the evaluation of rule bodies. On the other hand, it is important not to pursue branches of the reasoning with little chances of being relevant, as in the above described case of dynamic filtering.

### BRIEF SUMMARY OF THE INVENTION

It is an object of the present invention to optimize the performance of inference.

This aim is achieved by the inventions as claimed in the independent claims. Advantageous embodiments are described in the dependent claims.

Although no multiple referenced claims are drawn, all reasonable combinations of the features in the claims shall be disclosed.

### 1 The overall Reasoning Architecture

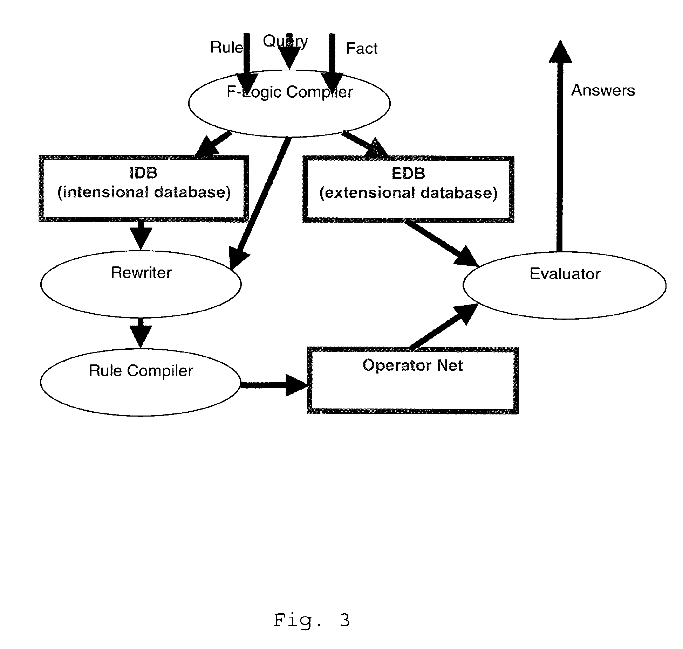

The inference engine according to the invention is a deductive main memory based reasoning system. A rough dataflow diagram of the reasoning kernel is shown in Fig 3.

If an F-Logic rule is added to inference engine, the rule is compiled with the F-Logic Compiler to the internal format. The internal format represents a complex F-Logic rule in a set of normal rules using the Lloyd-Topor transformation. These normal rules are added to the intensional database (IDB). This intensional database may either be a data structure in main memory or as another option may be a really persistent database like a commercial relational database.

If an F-Logic fact is added to the system, this fact again is compiled by the F-Logic compiler and then stored as a ground literal in the extensional database. In the same way as the intensional database the extensional database can be a main memory data structure or a persistent relational database.

The most interesting thing happens if a query is sent to the inference engine. After compiling the query a selection process takes place. The intensional database maintains a so called rule graph. This rule graph describes the dependencies between rules, i.e. which rule head unifies with which rule bodies. The query is used for cutting out that sub-graph out of the rule-graph which is connected to the query.

The resulting set of rules and the query is processed by a set of rewriters. These rewriters modify the set of rules in a way that the same answers are generated, but the evaluation may be processed faster. A well-known example for such a rewriter is MagicSet rewriting [U1189]. The architecture allows to add new rewriters very easily. Even users may add new Rewriters in throwing the corresponding java files into a predefined directory. These rewriters are then loaded during startup of the inference engine.

After that step, a rule compiler compiles the set of rules and the query into an operator net. The operator net consists of a graph of operators. Each operator receives tuples of terms, processes them and sends the results into the graph. Usually there are operators for joining tuple sets, operators for negation, operators for matching, and operators for built-ins. The inference engine according to the invention provides different evaluation methods which create different operator nets with different operators. Examples for such evaluation methods are bottom-up evaluation, dynamic filtering, and SLD. This architecture clearly separates the handling of rules from the evaluation and allows to easily develop new evaluation methods with new operators. In addition the operators may be processed independently from each other. So the multiprocessor/multicore architecture of the inference engine is based exactly on this fact. It means that every processing of an operator may be done in a separate independent thread allowing maximal parallelization of the execution.

Finally the evaluation of the operator net creates a set of result tuples. Every result tuple represents a substitution of the variables of the query. These substitutions are finally sent back to the client.

In the next sub-sections the different steps sketched here are refined and presented with additional examples.

### 2 Selection of the sub-rule-graph

The inference engine internally deals with so-called normal rules. A normal rule is a horn rule with possible negated literals in the body:
*H* : - *B*₁ *&* ... *& Bₙ & not N*₁ *&...& not Nₘ*

Where *H,Bᵢ* are positive literals and *not Nⱼ* are negated literals. A literal in turn consists of a predicate symbol p and terms as arguments *tₖ* :
*p*(*t*₁,...,*tₖ*)

A term t may either be a constant or a function or a variable. A function consists of a function symbol f and terms as arguments. A function in turn is a term:
*f*(*t*₁,...,*tₗ*)

In a rule graph the different rules are the nodes. Node r1 is connected to node r2 if the head literal of r1 unifies with one body literal in r2. Lets illustrate this in an example:
Given the rules:
p(f(X),Y) :- q (X, Y) & p(f(X),Y). // rule 1
p(f(X),X) :- r(X) & s(X). // rule 2
t(X) :- u(X). // rule 3
:- p(X,a). // rule 4

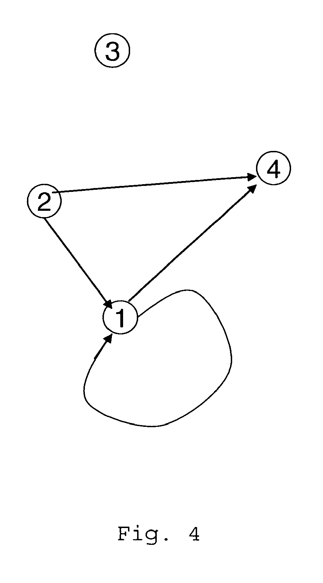

Results in the following rule graph as depicted in Fig. 4.

The selection process now searches for rules connected to the query (rule 4) and rules out all other rules, thus very often strongly reducing the set of rules to be considered. So in our running example rules 1, 2, and 4 are selected for the further evaluation process.

### 3 Rewriting the rules

In the next step a set of rewriters is applied. Every rewriter changes the set of rules. The goal is to transform the rules into another set of rules which delivers the same answer to the query but can be evaluated much faster. In the following we give an example for such a rewriter. Given the following rules:
p(X,Y) :- q(X,Y) & t(f(X),Y). // rule 1
p(X,X) :- r(X) & s(X). // rule 2
:- p(X,Y) & X < 5. // rule 3

Basically the rule graph may be seen as a graph where the facts flow along from the facts store, i.e. the EDB to the query. So in our example in Fig. 4, if there are facts for the predicates r and s, resp. r(1), r(2), s(a), these facts flow to rule 2 produce the new fact p(1,1) etc.. On the other hand we see that rule 3 restricts the values for the answer by the condition X < 5. So for the performance of the evaluation it is useful to apply this restriction as early as possible. So we could rewrite the set of rules to the following set of rules:
p(X,Y) :- q(X,Y) & t (f (X), Y) & X < 5. // rule 1'
p(X,X) :- r(X) & s (X) & X < 5. // rule 2'
: - p(X,Y). // rule 3'

It is obvious that this set of rules delivers the same result as the original set. Additionally, the condition that X < 5 is applied as early as possible and thus restricts the instances as early as possible, resulting in higher performance of the evaluation. In the literature we find a lot of other rewriting techniques for improving the performance, e.g. MagicSets [U1189].

### 4 Compiling rules

After rewriting the rules, a rule compiler compiles the rules into a so-called operator net. The operator net provides different operators for different purposes. For instance it provides join-operators to perform an "and" in a rule body, it provides match-operations to match the results of a rule to the body of a connected rule etc. Additionally it describes also the sequence in which different parts are evaluated. An operator net is very close to a data flow diagram. It usually does not need any additional control flow for the sequence of the evaluation of processes (operations). Let us illustrate this with an example.

Given the rules
p(X,X) :- r (X) & s(X).
:- P(X,1).

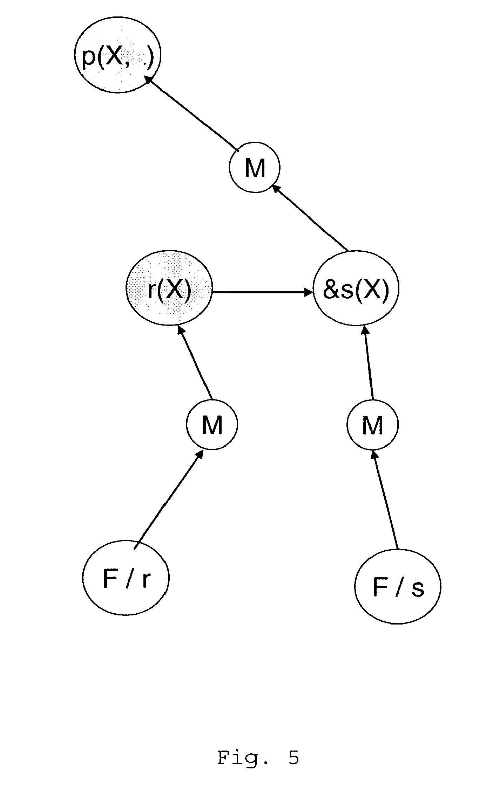

If we assume pure bottom-up evaluation the resulting operator net is very simple. It is depicted in Fig. 5.

From the EDB the instances r(1), r(2)., and r(3) for the r predicate flow over the F/r node to the body literal node r(X). The M node in between performs a match operation, which selects tuples and produces appropriate substitutions for the variables in r(X). In our case nothing has to be selected and we have three possible substitutions for variable X: {X/1, X/2, X/3}. The r(X) node is a move operator sending the variable substitutions directly to the connected nodes. In the same way the instances for the s predicate s(1), s(2) flow from the EDB to the s(X) node resulting in the substitutions {X/1, X/2}. This node is a join-operator which joins its two inputs resulting in the substitutions {x/1, X/2}. The results are again sent into the operator net and reach the match operation. This match operation requires X to be 1, which is true only for the first substitution X/1. Thus this substitution passes the match operation and reaches the query node q(X,1). So finally the substitution X/1 is the result of that query.

The strong advantage of separating the operator net from the rules itself is that it allows having different rule compilers which compile the set of rules into different operator nets. For instance the inference engine according to an advantageous embodiment includes a rule compiler for Bottom-up reasoning, for SLD reasoning, and for Dynamic Filtering reasoning.

The object of the invention is achieved by a computer system and a method. Furthermore, the object of the invention is achieved by:
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding claim, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network,
- a computer program product having program code means,
   wherein the program code means can be stored or are stored on a storage medium, for performing the method according to one of the embodiments described in this description, if the program code means are executed on a computer or on a computer network,
- at least one of an operating system, a computer readable medium having stored thereon a plurality of computer-executable instructions, a co-processing device, a computing device and a modulated data signal carrying computer executable instructions for performing the method according to one of the embodiments described in this description.

### BRIEF DESCRIPTION OF THE DRAWINGS

- Fig. 1: shows an exemplary system graph;
- Fig. 2: shows the exemplary system graph according to Fig. 1 with improved bottom up evaluation;
- Fig. 3: data flow of the reasoning kernel;
- Fig. 4: sample rule graph;
- Fig. 5: sample operator graph;

While the present inventions have been described and illustrated in conjunction with a number of specific embodiments, those skilled in the art will appreciate that variations and modifications may be made without departing from the principles of the inventions as herein illustrated, as described and claimed. The present inventions may be embodied in other specific forms without departing from their spirit or essential characteristics. The described embodiments are considered in all respects to be illustrative and not restrictive. The scope of the invention is, therefore, indicated by the appended claims, rather than by the foregoing description. All changes which come within the meaning and range of equivalence of the claims are to be embraced within their scope.

### References Cited

[U1189] J. Ullmann: Principles of Database and Knowledge-Base Systems, Volume II, Computer Science Press, 1989

## Claims

1. A computer system comprising:
a) means for storing data, the data being structured by an ontology, the ontology comprising:
a1) categories that are components of at least one categorical structure;
a2) attributes which are allocated to the categories and which can be inherited within the categorical structure;
a3) rules defining logical relations between categories and / or attributes and / or data; and
a4) the rules forming a declarative system; and
b) at least one query unit for making a query relating to the stored data; and
c) an inference unit in which the declarative rules are evaluated for generating the answer to the query by assigning values from the data to the attributes and / or categories and / or data, the inference unit comprising:
c1) at least one rule rewriter;
c2) a rule compiler; and
c3) an operator net.

2. A method for querying data, wherein the following steps are performed, in particular by using a data processing system:
a) storing the data, the data being structured by an ontology, the ontology comprising:
a1) categories that are components of at least one categorical structure;
a2) attributes which are allocated to the categories and which can be inherited within the categorical structure;
a3) rules defining logical relations between categories and / or attributes and / or data; and
a4) the rules forming a declarative system;
b) providing a query relating to the stored data; and
c) answering the query by means of inference, wherein the inference evaluates the declarative rules by assigning values from the data to the attributes and / or categories and / or data, wherein the inference
c1) rewrites the rules;
c2) compiles the rules; and
c3) builds an operator net.

3. A computer loadable data structure, that is adapted to perform the method according to the method claim while the data structure is being executed on a computer.

4. Computer program comprising program means for performing the method according to the method claim while the computer program is being executed on a computer or on a computer network.

5. A storage medium, wherein a data structure is stored on the storage medium and wherein the data structure is adapted to perform the method according to the method claim after having been loaded into a main and/or working storage of a computer or of a computer network.
